# EUROPÄISCHE PATENTANMELDUNG

(11) **EP 1 734 314 A1**
(43) Veröffentlichungstag der Anmeldung: **20.12.2006**
(21) Anmeldenummer: 06012340.3
(22) Anmeldetag: 14.06.2006
(51) Int. Cl.: F24F 13/15, B60H 1/34

(54) **Luftleitgitter für Belüftungskanäle**

(30) Priorität: 15.06.2005 DE 102005027618
(71) Anmelder: paragon AG, 33129 Delbrück (DE)
(72) Erfinder: Frers, Klaus Dieter, 33129 Delbrück (DE)
(74) Vertreter: Lelgemann, Karl-Heinz

(57) **Zusammenfassung**

Ein Luftleitgitter für Belüftungskanäle, insbesondere von Kraftfahrzeugen, hat eine motorische Verstellvorrichtung (5), mittels der das Luftleitgitter (1) in seinem Verstellbereich beliebig verstellbar ist, und eine Betätigungseinrichtung (7, 8, 9), durch deren Betätigung die motorische Verstellvorrichtung (5) inbetriebsetz- und das Luftleitgitter (1) verstellbar ist.

Um eine je nach Anforderungen optimale Belüftung eines Innenraums zu realisieren, wird vorgeschlagen, dass die motorische Verstellvorrichtung (5) mittels der Betätigungseinrichtung (7, 8, 9) in einen ersten Betriebszustand, in dem sie das Luftleitgitter (1) aus der aktuellen in eine mittels der Betätigungseinrichtung (7, 8, 9) vorgegebene Zielstellung verstellt und dort belässt, und in einen zweiten Betriebszustand einstellbar ist, in dem sie das Luftleitgitter (1) kontinuierlich verstellt.

## Beschreibung

Die Erfindung bezieht sich auf ein Luftleitgitter für Belüftungskanäle, insbesondere von Kraftfahrzeugen, mit einer motorischen Verstellvorrichtung, mittels der das Luftleitgitter in seinem Verstellbereich beliebig verstellbar ist, und einer Betätigungseinrichtung, durch deren Betätigung die Verstellvorrichtung inbetriebsetz- und das Luftleitgitter verstellbar ist.

Es sind Luftleitgitter mit automatischen motorischen Verstellvorrichtungen bekannt, bei denen eine automatische Verstellung von Lamellen des Luftleitgitters in Abhängigkeit von bestimmten Parametern, z.B. Sonneneinstrahlung, Temperatur etc., erfolgt. Darüber hinaus sind die Lamellen dieser aus dem Stand der Technik bekannten Luftleitgitter manuell in diskrete Positionen verstellbar, wobei eine derartige Verstellung sowohl für vertikale als auch für horizontale Lamellen vorgesehen sein kann. Mittels der manuellen Verstellung lässt sich das Luftleitgitter in eine fixierte, seitens der Bedienungsperson gewünschte Positionierung verbringen, in der eine Luftströmung in einer bestimmten Richtung in den Innenraum eintritt.

Ausgehend von dem vorstehend geschilderten Stand der Technik liegt der Erfindung die Aufgabe zugrunde, ein Luftleitgitter zu schaffen, welches in einfacher Weise je nach gewünschtem Anforderungsprofil das angestrebte Strömungsverhalten der in den Innenraum eintretenden Luftströmung gewährleistet. Hierbei soll die mechanische Beanspruchung der Lamellen des Luftleitgitters bzw. der damit verbundenen Bauteile desselben möglichst minimiert werden.

Diese Aufgabe wird erfindungsgemäß dadurch gelöst, dass die motorische Verstellvorrichtung des Luftleitgitters mittels der Betätigungseinrichtung desselben in einen ersten Betriebszustand, in dem sie das Luftleitgitter aus der aktuellen in eine mittels der Betätigungseinrichtung vorgegebene Zielstellung verstellt und dort belässt, und in einen zweiten Betriebszustand einstellbar ist, in dem sie das Luftleitgitter kontinuierlich verstellt. Jede Verstellung des Luftleitgitters erfolgt mittels der motorischen Verstellvorrichtung, so dass eine mechanische Überlastung des Luftleitgitters bzw. seiner Bauteile zuverlässig vermieden wird. Im ersten Betriebszustand der motorischen Verstellvorrichtung wird das Luftleitgitter in die jeweils an der Bedienungseinrichtung manuell vorgegebene Position unter Einsatz der motorischen Verstellvorrichtung verstellt. Im zweiten Betriebszustand kann eine allmähliche und kontinuierliche Verstellung des Luftleitgitters erfolgen, so dass ein Innenraum mit einer sich hinsichtlich ihrer Richtung kontinuierlich ändernden Luftströmung gleichmäßig beaufschlagt und durchlüftet werden kann. Auch in diesem zweiten Betriebszustand kann es nicht zu einer mechanischen Überlastung einzelner Bauteile des Luftleitgitters kommen.

Im zweiten Betriebszustand kann die Verstellung des Luftleitgitters mittels der motorischen Verstellvorrichtung vorteilhaft gemäß einem vorgebbaren, vorzugsweise variablen, Programm realisiert werden. Je nach Witterungsbedingungen, Temperatur, Sonnenstand etc. sowie Fahrtrichtung eines Kraftfahrzeugs kann das Programm optimal gestaltet werden, so dass sich die erwünschten Belüftungswirkungen innerhalb des Innenraums ergeben.

Soweit die Betätigungseinrichtung des Luftleitgitters ein vorzugsweise als Taster ausgebildetes Schaltglied aufweist, bei dessen einmaliger Betätigung die motorische Verstellvorrichtung ihren zweiten Betriebszustand einnimmt, ist sichergestellt, dass am beispielsweise für einen Kraftfahrzeugführer sichtbaren Bereich des Luftleitgitters keine sich bewegenden Bauteile vorhanden sind, so dass irgendwelche optischen Effekte, die eine Ablenkung und Störung des Kraftfahrzeugführers verursachen könnten, nicht auftreten.

Um in möglichst einfacher Weise eine gewünschte fixierte Position des Luftleitgitters zu erzielen, ist es vorteilhaft, wenn die Betätigungseinrichtung des Luftleitgitters zumindest einen Einstellbereich aufweist, der dem ersten Betriebszustand der Verstellvorrichtung zugeordnet ist und an dem beliebige Zielstellungen des Luftleitgitters vorgebbar sind.

In einer besonders vorteilhaften Ausführungsform weist die Betätigungseinrichtung des Luftleitgitters als Einstellbereiche zwei optische Bedienelemente auf, die an eine Steuereinheit angeschlossen sind, mittels der ein erster Verstellmotor der Verstellvorrichtung für horizontal angeordnete Lamellen des Luftleitgitters und ein zweiter Verstellmotor der Verstellvorrichtung für vertikal angeordnete Lamellen des Luftleitgitters steuerbar sind. An diese Steuereinheit kann selbstverständlich auch das als Taster ausbildbare Schaltglied der Betätigungseinrichtung angeschlossen sein, bei dessen Betätigung die motorische Verstellvorrichtung ihren zweiten Betriebszustand einnimmt.

Im folgenden wird die Erfindung anhand eines Ausführungsbeispiels unter Bezugnahme auf die Zeichnung näher erläutert.

Es zeigen:
- Figur 1: eine Prinzipdarstellung einer Ausführungsform eines erfindungsgemäßen Luftleitgitters in perspektivischer Vorderansicht;
- Figur 2: eine Prinzipdarstellung der in Figur 1 gezeigten Ausführungsform des erfindungsgemäßen Luftleitgitters in perspektivischer Seitenansicht; und
- Figur 3: eine Prinzipdarstellung der in den Figuren 1 und 2 gezeigten Ausführungsform des erfindungsgemäßen Luftleitgitters in teilweise perspektivischer Rückansicht.

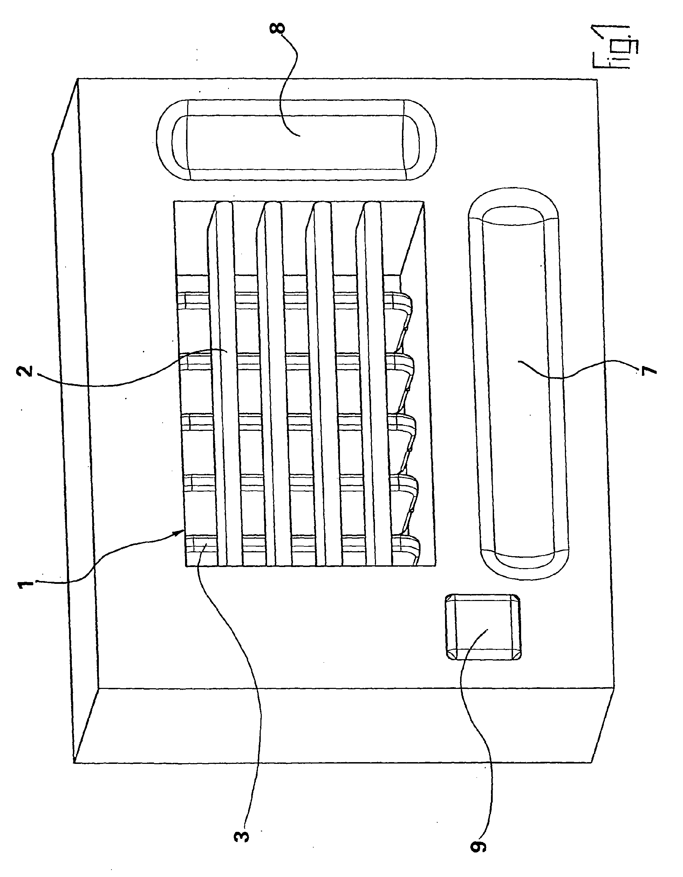

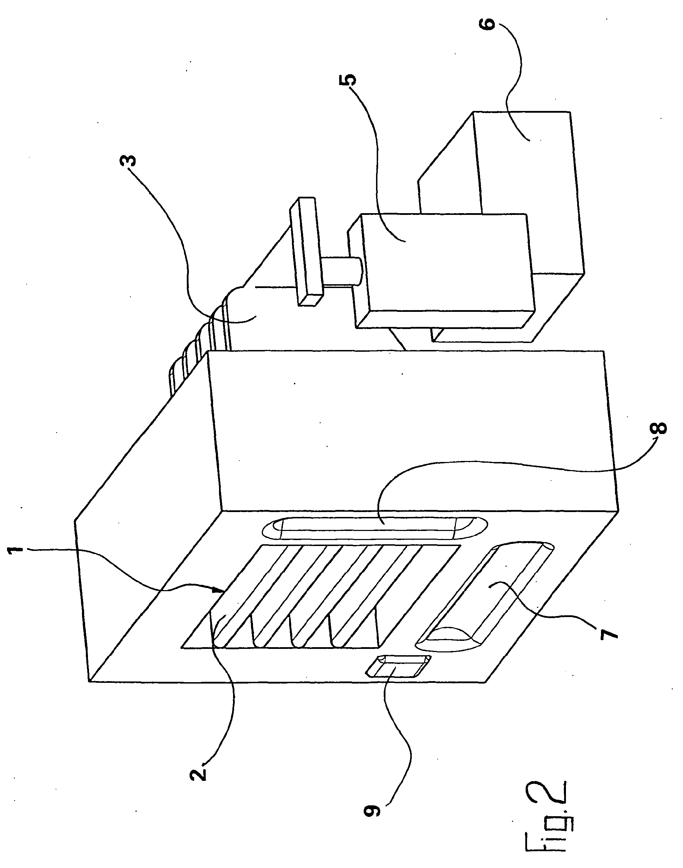

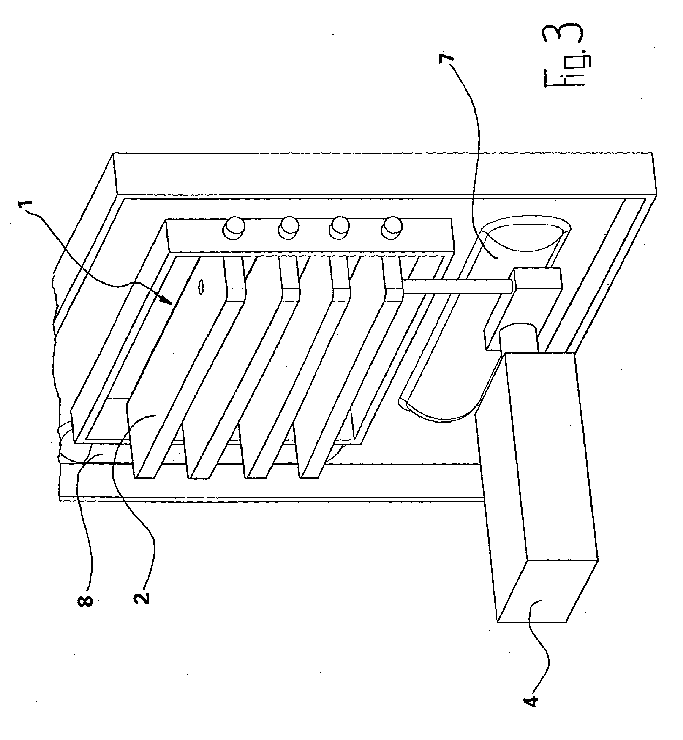

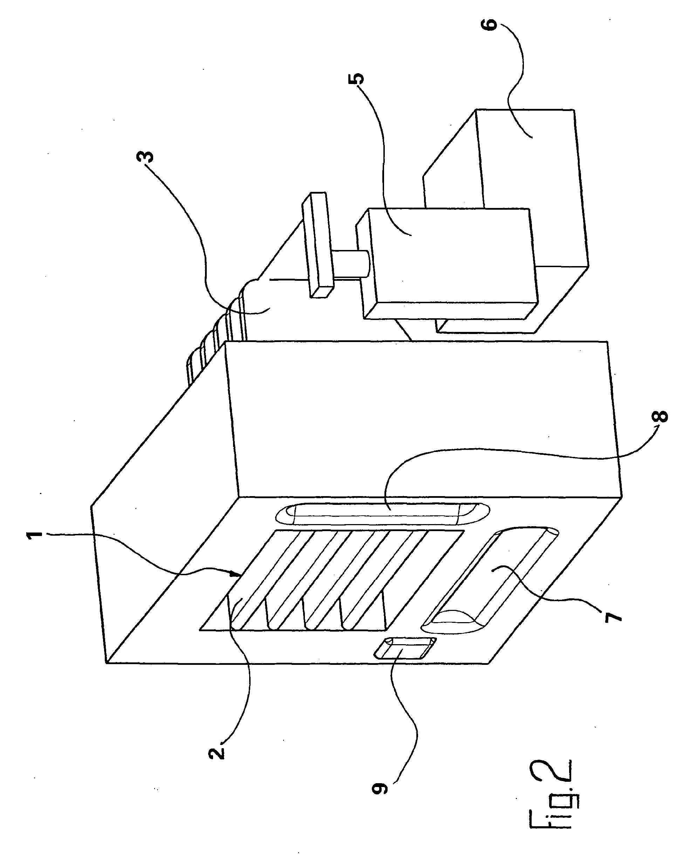

Ein in den Figuren 1 bis 3 prinzipiell gezeigtes Luftleitgitter 1 dient dazu, Luftströme, die aus in den Figuren nicht gezeigten Belüftungskanälen in einen Innenraum, z.B. in den Innenraum eines Kraftfahrzeugs, gelangen, in beliebiger Weise in den Raum hinein zu lenken bzw. zu richten. Hierzu weist das Luftleitgitter 1 im in den Figuren 1 bis 3 gezeigten Ausführungsbeispiel horizontale Lamellen 2 und vertikale Lamellen 3 auf.

Jede horizontale Lamelle 2 ist um eine horizontale, jede vertikale Lamelle 3 um eine vertikale Drehachse kippbar. Die Drehung bzw. Kippung der horizontalen Lamellen 2 erfolgt gleichmäßig und gleichzeitig. Dasselbe gilt für die Drehung der vertikalen Lamellen 3. Je nach Positionierung der horizontalen Lamellen 2 bzw. der vertikalen Lamellen 3 lässt sich die aus dem in den Figuren nicht gezeigten Belüftungskanal austretende Luftströmung in der gewünschten Weise in den Innenraum richten bzw. lenken.

Es sei darauf hingewiesen, dass auch Ausführungsformen des Luftleitgitters 1 denkbar sind, bei denen das Luftleitgitter als solches insgesamt um eine etwa in Strömungsrichtung verlaufende Achse drehbar ist, so dass sowohl die horizontalen Lamellen 2 als auch die vertikalen Lamellen 3 geneigt zur Horizontalen bzw. zur Vertikalen angeordnet sind.

Im in den Figuren 1 bis 3 gezeigten Ausführungsbeispiel hat das Luftleitgitter 1 eine motorische Verstellvorrichtung 4, 5, zu der ein den horizontalen Lamellen 2 zugeordneter erster Verstellmotor 4 und ein den vertikalen Lamellen 3 zugeordneter zweiter Verstellmotor 5 gehören. Die Ausgangsseite der beiden Verstellmotoren 4, 5 ist in an sich bekannter Weise mit den horizontalen 2 bzw. vertikalen Lamellen 3 verbunden, so dass der Betrieb der beiden Verstellmotoren 4, 5 eine Drehung der horizontalen 2 bzw. vertikalen Lamellen 3 um deren Dreh- bzw. Kippachsen zur Folge hat.

Die beiden Verstellmotoren 4, 5 der motorischen Verstellvorrichtung des Luftleitgitters 1 werden im in den Figuren gezeigten Ausführungsbeispiel mittels einer Steuereinheit 6 gesteuert bzw. geregelt.

Eingabeseitig ist die Steuereinheit 6 an eine Betätigungseinrichtung 7, 8, 9 angeschlossen, die im folgenden im einzelnen beschrieben wird. Zu dieser Betätigungseinrichtung gehört ein als optisches Bedienelement 7 ausgebildeter erster Einstellbereich, mittels dem ein Einstellsignal in die Steuereinheit 6 eingebbar ist, welches der gewünschten Zielstellung der horizontalen Lamellen 2 entspricht. Entsprechend ist ein ebenfalls als optisches Bedienelement 8 ausgebildeter zweiter Einstellbereich Bestandteil der Betätigungseinrichtung, der den vertikalen Lamellen 3 des Luftleitgitters 1 zugeordnet ist und mittels dem ein Einstellsignal in die Steuereinheit 6 eingebbar ist, das der jeweils gewünschten Position der vertikalen Lamellen 3 entspricht.

In einem ersten Betriebszustand der motorischen Verstellvorrichtung 4, 5 wird das Luftleitgitter 1 bzw. werden die horizontalen Lamellen 2 und die vertikalen Lamellen 3 mittels der ihnen zugeordneten Verstellmotoren 4, 5 in diejenigen Positionen bzw. Stellungen verbracht, die am ersten Einstellbereich 7 für die horizontalen Lamellen 2 und am zweiten Einstellbereich 8 für die vertikalen Lamellen 3 vorgegeben worden sind. Nach Erreichen dieser Zielstellungen halten die beiden Verstellmotoren 4, 5 an, so dass das Luftleitgitter 1 in der gewünschten Zielstellung verbleibt.

Mittels eines als Taster 9 ausgebildeten Schaltglieds der Betätigungseinrichtung lässt sich die motorische Verstellvorrichtung 4, 5 in einen zweiten Betriebszustand versetzen. Hierbei werden der erste Verstellmotor 4 und der zweite Verstellmotor 5 mittels der Steuereinheit 6 so gesteuert bzw. geregelt, dass sie die horizontalen Lamellen 2 bzw. die vertikalen Lamellen 3 kontinuierlich verstellen. Die kontinuierliche Verstellung der horizontalen Lamellen 2 und der vertikalen Lamellen 3 kann gemäß einem beliebigen in der Steuereinheit 6 vorhandenen Programm erfolgen, wobei dieses Programm je nach Anforderungen verändert werden kann. Bei der programmgemäß ablaufenden Verstellung der horizontalen Lamellen 2 und der vertikalen Lamellen 3 bewegt sich kein sichtbares Bauteil des Luftleitgitters 1, so dass keine einen Kraftfahrzeugführer störenden optische Effekte auftreten.

Selbstverständlich ist es möglich, bei einem derartigen, beliebig vorgebbaren Programm nur die horizontalen Lamellen 2 oder nur die vertikalen Lamellen 3 zu verstellen.

Für den Fall, dass während des zweiten Betriebszustands der motorischen Verstellvorrichtung eine Betätigung des ersten 7 oder zweiten Einstellbereichs erfolgt, wechselt die motorische Verstellvorrichtung 4, 5 automatisch zurück in den ersten Betriebszustand.

Mit dem vorstehend geschilderten Luftleitgitter 1 ist es möglich, das Luftleitgitter 1 im ersten Betriebszustand der motorischen Verstellvorrichtung 4, 5 in exakt diejenige Position einzustellen, die der Steuereinheit 6 durch die beiden als optische Bedienelemente 7, 8 ausgebildeten Einstellbereiche der Betätigungseinrichtung eingegeben werden. Im zweiten Betriebszustand der motorischen Verstellvorrichtung 4, 5 erfolgt eine automatische, per Programm vorgebbare kontinuierliche Verstellung des Luftleitgitters 1, so dass der Innenraum, z.B. der Innenraum eines Kraftfahrzeugs, mit unterschiedlich gerichteten und ihre Richtung allmählich ändernden Luftströmungen beaufschlagt werden kann.

## Patentansprüche

1. Luftleitgitter für Belüftungskanäle, insbesondere von Kraftfahrzeugen, mit einer motorischen Verstellvorrichtung (4, 5), mittels der das Luftleitgitter (1) in seinem Verstellbereich beliebig verstellbar ist, und einer Betätigungseinrichtung (7, 8, 9), durch deren Betätigung die motorische Verstellvorrichtung (4, 5) inbetriebsetz- und das Luftleitgitter (1) verstellbar ist, **dadurch gekennzeichnet, dass** die motorische Verstellvorrichtung (4, 5) mittels der Betätigungseinrichtung (7, 8, 9) in einen ersten Betriebszustand, in dem sie das Luftleitgitter (1) aus der aktuellen in eine mittels der Betätigungseinrichtung (7, 8, 9) vorgegebene Zielstellung verstellt und dort belässt, und in einen zweiten Betriebszustand einstellbar ist, in dem sie das Luftleitgitter (1) kontinuierlich verstellt.

2. Luftleitgitter nach Anspruch 1, bei dem die Verstellung des Luftleitgitters (1) im zweiten Betriebszustand der motorischen Verstellvorrichtung (4, 5) gemäß einem vorgebbaren, vorzugsweise variablen, Programm realisierbar ist.

3. Luftleitgitter nach Anspruch 1 oder 2, dessen Betätigungseinrichtung (7, 8, 9) ein vorzugsweise als Taster (9) ausgebildetes Schaltglied aufweist, bei dessen Betätigung die motorische Verstellvorrichtung (4, 5) ihren zweiten Betriebszustand einnimmt.

4. Luftleitgitter nach einem der Ansprüche 1 bis 3, dessen Betätigungseinrichtung (7, 8, 9) zumindest einen Einstellbereich (7, 8) aufweist, der dem ersten Betriebszustand der motorischen Verstellvorrichtung (4, 5) zugeordnet ist und an dem beliebige Zielstellungen des Luftleitgitters (1) vorgebbar sind.

5. Luftleitgitter nach einem der Ansprüche 1 bis 4, dessen Betätigungseinrichtung (7, 8, 9) als Einstellbereiche zwei optische Bedienelemente (7, 8) aufweist, die an eine Steuereinheit (6) angeschlossen sind, mittels der ein erster Verstellmotor (4) der Verstellvorrichtung (4, 5) für horizontal angeordnete Lamellen (2) des Luftleitgitters (1) und ein zweiter Verstellmotor (5) der Verstellvorrichtung (4, 5) für vertikal angeordnete Lamellen (3) des Luftleitgitters (1) steuerbar sind.
